# FASCICULE DE BREVET EUROPEEN

(11) **EP 1 876 097 B1**
(45) Date de publication et mention de la délivrance du brevet: **18.11.2009**
(21) Numéro de dépôt: 07111795.6
(22) Date de dépôt: 05.07.2007
(51) Int. Cl.: B64G 1/22, B64G 1/66

(54) **Actionneur pour systèmes de guidage d'équipements spatiaux à taux de rotation variable**
Aktuator für Führungssysteme von Raumfahrtausrüstungen mit variabler Rotationsgeschwindigkeit
Guiding system actuator for space equipment with variable rate of rotation

(30) Priorité: 05.07.2006 FR 0652805
(43) Date de publication de la demande: 09.01.2008
(73) Titulaire: Thales, 92200 Neuilly Sur Seine (FR)
(72) Inventeur: Baudasse, Yannick, 06130 Grasse (FR); Brossier, Jérôme, 06150 Cannes la Bocca (FR); Jeandot, Xavier, 06210 Mandelieu (FR)
(74) Mandataire: Esselin, Sophie

(56) Documents cités:
- EP-A1- 0 481 857
- EP-A1- 0 738 656
- FR-A1- 2 703 415
- US-B1- 6 267 363

## Description

Le domaine de la présente invention est celui des composants de guidage pour les équipements utilisés dans les applications spatiales, telles par exemple que la fabrication de satellites, et en particulier celui des dispositifs de pointage en rotation pour appendices spatiaux.

Dans les applications spatiales il est nécessaire de pouvoir orienter certains éléments d'un satellite ou d'un véhicule spatial, tels qu'une antenne, un mât, etc., dans une direction prédéterminée afin, par exemple, de les diriger vers une étoile fixe, de conserver un pointage vers un point à la surface de la terre, ou bien encore de balayer une zone particulière à la surface de la terre ou d'un astre quelconque. Ces positionnements doivent être fréquemment corrigés pour compenser d'inévitables dérives dans la tenue de cette direction et ces multiples corrections entraînent la réalisation d'un nombre important de cycles de micro-rotation pour ces appendices spatiaux et pour leurs dispositifs de guidage.

Compte tenu du caractère irréversible de la mise en orbite d'un satellite, il est nécessaire de prévoir lors de la conception de l'engin spatial, une durée de vie, mesurée en nombre de cycles, très importante pour ces équipements, de façon à garantir leur capacité à résister à ces très nombreuses sollicitations.

Cette phase dite de pointage fin fait généralement suite à une phase de déploiement, au cours de laquelle les appendices spatiaux sont sortis du conditionnement qui a été défini pour le lancement et sont mis en position pour assurer leur fonction. Même si dans certains cas on peut avoir besoin de recourir à des déploiements multiples, ceux-ci restent en nombre très limité (au plus quelques dizaines, voire une centaine) et ne nécessitent pas que les dispositifs de pointage soient dimensionnés pour le déploiement de façon aussi contraignante que pour des mouvements de pointage fin.

Comme ces équipements doivent fonctionner dans le vide spatial, on se heurte à un problème particulier lié à la difficulté d'assurer une bonne lubrification des parties en contact lors de ces rotations.

Les réalisations antérieures, tel que décrit notamment dans le document FR 2 703 415, ont été obligées de choisir, pour ces mouvements en rotation, entre des systèmes à base de roulements, de paliers, rotules, ou rail à billes, etc. capables d'assurer des déplacements angulaires de grande amplitude, et des systèmes à base de composants flexibles, sans contact entre les pièces tournantes, mais qui ne permettent que des déplacements angulaires limités.

Un dispositif de positionnement a toutefois été mis au point, qui est capable, avec une même motorisation, de réaliser des mouvements angulaires de grande amplitude à relativement faible durée de vie pour une phase dite de déploiement et de mouvements de faible amplitude à très grande durée de vie pour une phase dite de pointage fin.

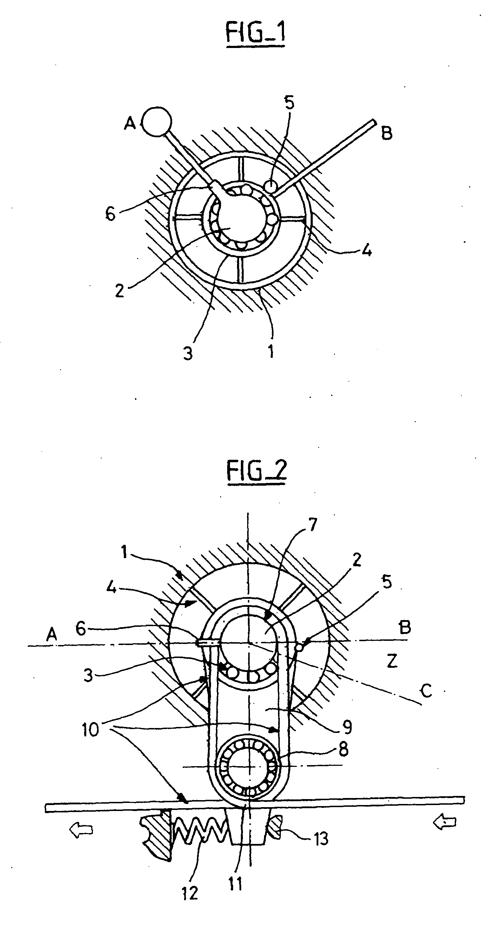

Un tel dispositif est réalisé, comme indiqué sur la figure 1, par un ensemble constitué par une pièce attachée à la partie fixe d'un équipement spatial, liée à une des bagues d'un roulement à billes ou à rouleaux au travers d'une liaison élastique en rotation autour de l'axe du roulement et par un manche destiné à actionner la partie mobile de l'équipement, lié de façon rigide à l'autre bague du roulement. Une butée est fixée sur une des bagues du roulement pour venir en appui contre un élément attaché de façon rigide à l'autre bague, de façon à limiter angulairement la rotation relative des deux bagues. Le positionnement de cette butée est réglable en rotation sur sa bague support ce qui permet de déplacer à volonté la zone sur laquelle sera effectué le pointage fin. Le déploiement s'effectue en actionnant le roulement en rotation et le pointage fin s'effectue par déformation de la liaison élastique, sans consommation des cycles de vie du roulement.

Il convient maintenant d'entraîner ce dispositif en rotation pour assurer les fonctions de déploiement et de pointage fin. Le dispositif d'entraînement en question doit pouvoir déployer un objet, rapidement sur une grande amplitude (typiquement 180°) puis le pointer avec précision (typiquement quelques millièmes de degrés sur une plage d'environ 6°). Pour cela ils doivent transformer un mouvement linéaire continu, de faible amplitude, produit généralement par un actuateur linéaire, en un mouvement rotatif sans jeu, à forte capacité de durée de vie.

Les dispositifs d'entraînement généralement utilisés dans le domaine des satellites sont constitués soit par des moto-réducteurs à d'un moteur pas à pas associé à un réducteur du type "Harmonic Drive" soit par des mécanismes composés d'un moteur pas à pas, d'un engrenage et d'un réducteur à bandes.

Ces dispositifs ne sont pas satisfaisant pour les raisons suivantes : soit ils ont un jeu interne qui est incompatible des précisions ou durées de vie demandées (ex : engrenage), soit ils proposent un taux de rotation satisfaisant pour le pointage, mais au prix d'une durée de déploiement très pénalisante, soit enfin ils ne fournissent pas de précision suffisante et nécessitent alors un système complémentaire de réduction du taux de rotation en pointage (comme par exemple une poulie au rayon évolutif associée à une courroie) mais qui est encombrant et nécessite des courses linéaires importantes.

La présente invention a pour but de remédier à ces inconvénients en proposant un actionneur capable d'entraîner en rotation un dispositif de positionnement du type de celui représenté sur la figure 1, et d'assurer un positionnement en pointage extrêmement précis. Cet actionneur est capable de générer, à partir d'une course linéaire d'entrée réduite, des mouvements angulaires de grande amplitude pour la phase de déploiement et des mouvements de faible amplitude pour la phase de pointage fin.

A cet effet, l'invention a pour objet un actionneur pour dispositif de positionnement en rotation d'un élément mobile pour équipement spatial comprenant une pièce attachée à la partie fixe dudit équipement, un roulement du type à billes ou à rouleaux, un manche destiné à actionner la partie mobile dudit équipement et monté sur un arbre de sortie porté par une première bague dudit roulement, ledit actionneur comprenant un moyen d'entrée mobile mécaniquement et étant susceptible de transformer un mouvement du moyen d'entrée en un mouvement de rotation de l'arbre de sortie autour de l'axe dudit roulement caractérisé en ce que la seconde bague dudit roulement est liée en rotation à la pièce dudit équipement, en ce qu'une butée réglable est fixée à ladite bague et coopère avec le manche de façon à limiter angulairement la rotation relative des deux bagues dudit roulement, et en ce que le taux de rotation de l'arbre de sortie en réponse à un déplacement du moyen d'entrée est différent selon que le manche est, ou non, en appui sur la butée réglable.

On peut ainsi passer d'une rotation à grande amplitude lorsque le manche n'est pas sur la butée réglable à un mouvement de faible amplitude pour un même déplacement linéaire lorsque le manche est sur la butée réglable. On bénéficie ainsi de l'effet de réduction qui génère un pilotage aisé en phase de pointage fin.

De façon préférentielle le moyen d'entrée est une courroie circulant autour d'une poulie de renvoi portée par une platine montée en extension radiale sur la seconde bague.

Avantageusement l'extrémité libre de la platine est rappelée par un moyen élastique contre une butée fixe par rapport à la structure de l'équipement spatial.

Ceci permet de rendre inactif le système de réduction du taux de rotation utilisé lors du pointage fin, avant contact du manche sur la butée réglable.

De façon préférentielle l'extrémité libre de la platine est en contact avec la butée fixe lorsque le manche n'est pas en appui sur la butée réglable et n'est pas en contact avec la butée fixe lorsque le manche est en appui sur la butée réglable.

Ceci permet d'assurer le découplage entre les deux mouvements (déploiement et pointage fin) en associant de façon biunivoque un mouvement à un mode de commande de ce mouvement.

Dans un mode de réalisation particulier la courroie entraîne le manche par action directe sur l'arbre de sortie.

Préférentiellement la courroie entraîne le manche par l'intermédiaire d'un système démultipliant la rotation de la poulie de renvoi.

Cette configuration permet d'obtenir un grand débattement lors du déploiement avec une course très réduite du moyen d'entrée de l'actionneur.

De façon préférentielle la poulie de renvoi est une poulie double, la courroie circulant sur une première poulie et le manche étant entraîné par l'intermédiaire d'une seconde courroie agissant sur l'arbre de sortie et circulant sur une seconde poulie.

Avantageusement la seconde bague dudit roulement est liée en rotation à la pièce attachée à la partie fixe dudit équipement par l'intermédiaire de bras flexibles.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue de face d'un dispositif de positionnement en rotation susceptible d'être mû en rotation par l'actionneur selon l'invention;
- la figure 2 est une vue de face d'un dispositif de positionnement en rotation mû par un actionneur selon un premier mode de réalisation de l'invention;
- la figure 3 est une vue analogue à la figure 2, l'appendice spatial étant en début de phase de déploiement ;
- la figure 4 est une vue analogue à la figure 2, l'appendice spatial étant en fin de phase de déploiement;
- la figure 5 est une vue analogue à la figure 2, l'appendice spatial étant en phase de pointage fin;
- la figure 6 est une même vue de face d'un dispositif de positionnement en rotation mû par un actionneur selon un second mode de réalisation de l'invention, l'appendice spatial étant en début de phase de déploiement
- la figure 7 est une vue analogue à la figure 6, l'appendice spatial étant en fin de phase de déploiement;
- la figure 8 est une vue analogue à la figure 6, l'appendice spatial étant en phase de pointage fin.

En se référant à la figure 1, on voit un dispositif de positionnement en rotation susceptible d'être mû par un actionneur selon l'invention comprenant une couronne circulaire 1 liée à l'équipement du satellite concerné. Cette couronne 1 est reliée via des bras flexibles 4 à une seconde couronne circulaire 3 coaxiale à la première, formant bague extérieure d'un roulement du type à billes ou à rouleaux. La bague intérieure dudit roulement porte un arbre de sortie 2 sur lequel est fixée, via un manche de liaison 6, une pièce (non représentée) de conduite en rotation de la partie mobile de l'équipement du satellite concerné.

Sur la bague extérieure du roulement est fixée une butée réglable 5 sur laquelle vient s'arrêter le manche 6, de façon à empêcher la rotation de l'arbre de sortie 2 au-delà de cette position de butée.

En référence à la figure 2, on voit l'actionneur du dispositif de positionnement en rotation comprenant une piste d'entraînement pour courroie 7 portée par l'arbre de sortie 2, une platine 9 portée par la bague extérieure 3 du roulement, s'étendant radialement de ladite bague extérieure, et une poulie 8, dite poulie de renvoi, portée par cette platine et libre en rotation, sur laquelle coexistent deux pistes d'entraînement pour courroie. Une courroie 10, actionnée par un moteur linéaire non représenté, chemine, pour une première partie, sur une première piste de la poulie de renvoi 8, jusqu'à la piste d'entraînement 7 de l'arbre de sortie à laquelle elle est de préférence attachée. Sa seconde partie, retourne ensuite vers le moteur linéaire via la seconde piste d'entraînement de la poulie de renvoi 8. L'extrémité libre 11 de la platine 9 est poussée par un ressort 12, lié à la structure de l'équipement du satellite concerné, en direction d'une butée fixe 13 par rapport à la structure de l'équipement.

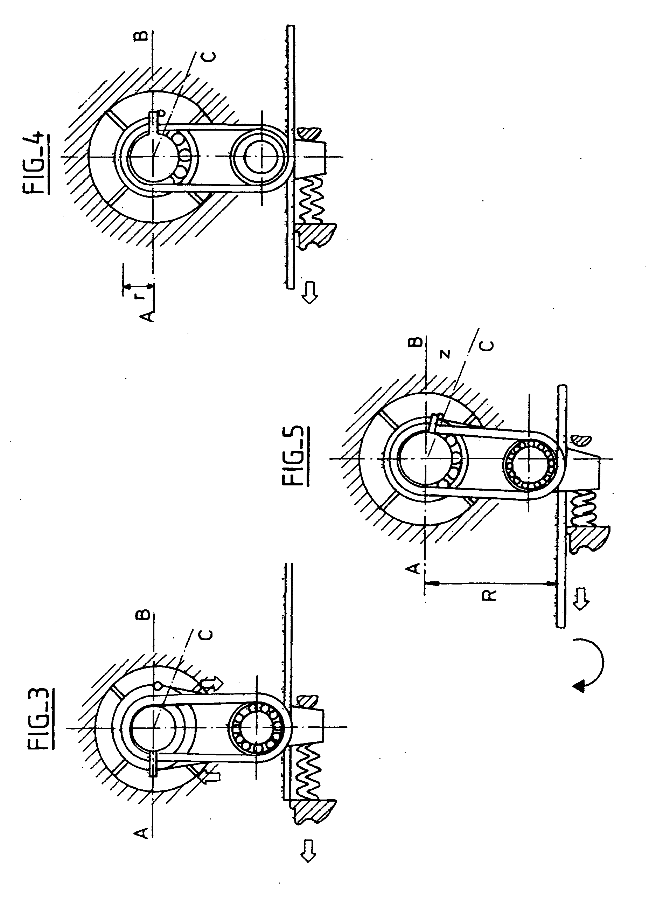

En référence aux figures 3 à 5, on voit le manche 6 dans des positions A, B et C correspondant respectivement aux positions de début de déploiement, de fin de déploiement et de débattement dans la zone de pointage fin. La zone Z indique le débattement autorisé au manche 6 par la flexibilité des bras 4 lorsque ledit manche 6 est en contact avec la butée réglable 5, c'est-à-dire lorsque le dispositif est en phase de pointage fin.

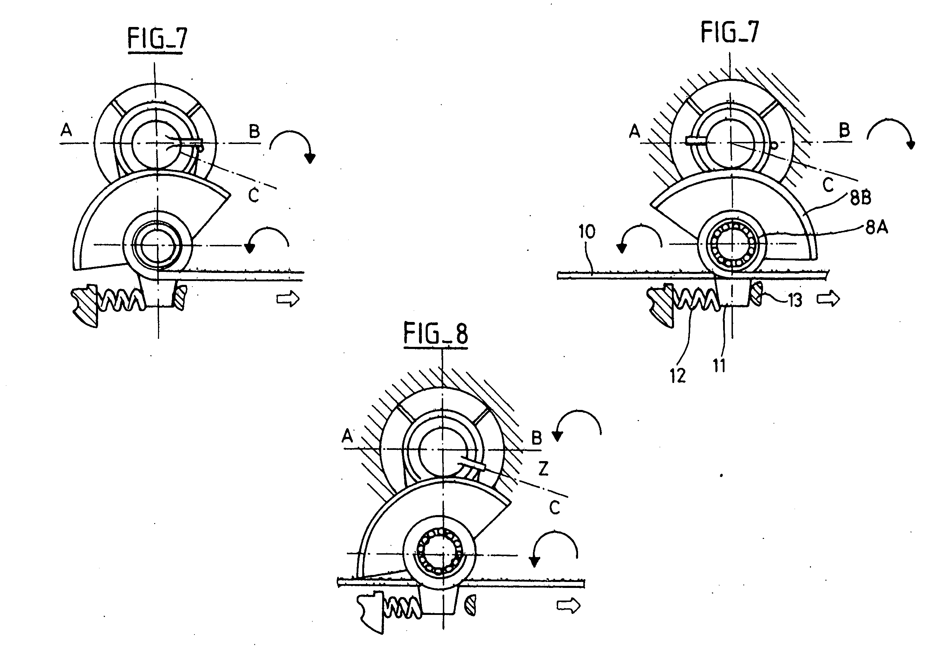

En référence aux figures 6 à 8, on voit un deuxième mode de réalisation de l'invention. Les éléments de l'actionneur identiques au premier mode de réalisation sont désignés par le même chiffre de référence et ne sont pas décrits à nouveau. On voit ici, de même, le manche 6 dans des positions A, B et C correspondant respectivement aux positions de début de déploiement, de fin de déploiement et de débattement dans la zone de pointage fin, et une zone Z de débattement possible du manche au cours du pointage fin. La poulie 8 est une poulie double composée de deux poulies ou sections de poulie 8A et 8B de diamètres différents. La courroie 10 passe sur la poulie 8A et retourne directement vers le moteur linéaire. Une seconde courroie 20 relie la seconde poulie 8B, à laquelle elle est attachée, à la piste d'entraînement 7 de l'arbre de sortie 2. De même que précédemment, l'extrémité libre 11 de la platine 9 est poussée par un ressort 12 en direction d'une butée fixe 13.

On va maintenant décrire le fonctionnement de l'invention lors d'une phase de déploiement de l'équipement concerné du satellite suivie d'une phase de pointage fin.

Au départ l'équipement concerné du satellite est dans une position d'attente représentée par le manche 6 dans la position A (figure 3). Ce manche doit être amené dans la zone Z, comprise entre les positions B et C, de façon que l'équipement concerné du satellite puisse assurer sa fonction de pointage dans une direction déterminée ou de balayage d'une zone terrestre. L'étendue de la zone Z est définie par l'homme du métier, lors de la conception du dispositif de positionnement en rotation, de façon à obtenir une amplitude suffisante pour couvrir les fluctuations à venir sur la direction que l'on entend poursuivre.

En utilisation, préalablement à tout déploiement, la zone Z est positionnée, par l'opérateur avant le lancement ou en orbite par tout système automatique ou télécommandé prévu à cet effet, par le placement de la butée réglable 5 en face de la direction ou de la zone à couvrir.

Le moteur linéaire est mis en action pour déplacer la courroie 10 dans le sens des flèches figurant sur la figure 2. Cette courroie 10 passe sur la première piste de la poulie de renvoi 8 et entraîne l'arbre de sortie 2 en rotation par l'intermédiaire de la piste d'entraînement 7. Le déplacement de la courroie entraîne la rotation du manche 6 de la position A vers la position B. A la fin du déploiement (figure 4), c'est à dire lorsque la rotation de cette partie mobile a atteint le point où le manche 6 vient en contact sur la butée réglable 5, le roulement s'immobilise et ses deux bagues restent par la suite fixes l'une par rapport à l'autre.

La rotation de l'élément mobile de l'équipement concerné peut cependant se poursuivre au-delà de cette position grâce à la flexibilité des bras 4 situés entre le roulement et la partie fixe de l'équipement concerné.

En réponse à la sollicitation d'un dispositif de guidage (non représenté), conformément aux besoins de l'équipement du satellite concerné, le moteur linéaire poursuit son action pour positionner l'élément mobile de l'équipement concerné dans la direction précise souhaitée. Ce faisant il pousse en rotation l'ensemble monobloc constitué désormais par l'arbre de sortie 2, le manche 6, la bague extérieure 3 du roulement et la platine 9 qui porte la poulie de renvoi 8. Simultanément l'extrémité libre 11 se décolle de la butée fixe 13, en comprimant le ressort de rappel 12 (figure 5'), et déforme les bras flexibles 4 jusqu'à ce que la direction souhaitée soit atteinte.

Sous l'action du dispositif de guidage et des déplacements de courroie commandés dans les deux sens par le moteur linéaire, la position du manche est pilotée à l'intérieur de la zone Z de façon à remplir la mission de pointage fin nécessitée par l'équipement du satellite concerné, sans que le roulement ne soit lui-même sollicité en rotation.

En cas d'une demande de repliement de l'équipement en question le moteur linéaire est actionné dans le sens inverse des flèches de la figure 2. Sous l'action du ressort de rappel 12 l'extrémité libre 11 de la platine 9 vient se mettre en appui sur la butée fixe 13 ce qui arrête la rotation de la platine 9 et désolidarise le manche 6 de la butée réglable 5. Les bras flexibles 4 sont mis hors flexion et la rotation du manche 6 se poursuit jusqu'à ce qu'il atteigne la position A de repliement.

Un tel actionneur permet, comme demandé pour la résolution du problème technique associé à l'invention, d'effectuer les quelques mouvements de grande amplitude des phases de déploiement en actionnant le roulement à billes ou à rouleaux et les nombreux mouvements de faible amplitude demandés lors de la phase de pointage fin par la déformation des bras flexibles. Du fait que tous les petits mouvements sont effectués sans utilisation du roulement celui-ci est peu sollicité et ne consomme qu'un nombre limité des cycles de fonctionnement de sa durée de vie. Celle-ci est alors compatible avec celle d'un satellite, même si les conditions de lubrification dans l'espace ne sont pas optimales. A contrario les petits mouvements sont réalisés sans faire appel à des pièces entrant en contact entre elles, qui ne nécessitent ainsi pas de lubrification. La durée de vie du dispositif de pointage fin, mesurée en nombre de cycles de fonctionnement, est alors relativement grande.

Une caractéristique essentielle de l'actionneur selon l'invention est la fonction de réducteur variable en rotation qu'il assure selon que l'on fonctionne en mode déploiement ou en mode de pointage fin.

En effet lorsque l'actionneur fonctionne en mode déploiement le couple qui entraîne la rotation du manche 6 est fourni par l'action de la courroie 10 tournant autour de l'axe de l'arbre de sortie 2. Le bras de levier est égal au diamètre r de cet arbre de sortie, comme indiqué sur la figure 4. En revanche lorsque l'actionneur fonctionne en mode de pointage fin, le couple est fourni par la rotation de l'ensemble monobloc arbre de sortie 2 - bague extérieure 3 - platine 9 autour du même arbre de sortie 2. Le bras de levier exercé par la courroie est alors égal à la distance R représentée sur la figure 5.

Pour un même déplacement linéaire élémentaire L de la courroie le déplacement angulaire de l'arbre de sortie 2 a, dans le mode déploiement, une valeur Ω telle que L = r Ω et, dans le mode de pointage fin, une valeur ω telle que L= R ω. Du fait que r est très inférieur à R, la rotation ω est très inférieure à Ω. La sensibilité du pilotage de la rotation par le moteur linéaire, caractérisée par la faible valeur de l'angle ω obtenu pour un déplacement L donné, est alors considérablement accrue. Un tel actionneur permet ainsi une précision de positionnement compatible avec les besoins en pointage des équipements des satellites.

Le fonctionnement de l'actionneur selon le deuxième mode de réalisation est similaire au premier mode. Le déplacement de la courroie entraîne les poulies 8A et 8B en rotation. La poulie 8B entraîne en rotation la seconde courroie 20 qui commande, comme précédemment, la rotation de l'arbre de sortie 2 par l'intermédiaire de la piste d'entraînement 7.

L'avantage apporté par ce mode de réalisation particulier est une démultiplication de la rotation de l'arbre de sortie lors de la phase de déploiement, dans le rapport des rayons des deux poulies 8A et 8 B. Le déploiement de l'appendice spatial concerné, de la position A à la position B, peut être réalisé par un déplacement linéaire de la courroie 10 beaucoup plus court. Le fonctionnement de l'actionneur en phase de pointage fin est, quant à lui, identique au mode de réalisation précédent.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Actionneur pour dispositif de positionnement en rotation d'un élément mobile pour équipement spatial comprenant une pièce (1) apte à être attachée à la partie fixe dudit équipement, un roulement du type à billes ou à rouleaux, un manche (6) destiné à actionner la partie mobile dudit équipement et monté sur un arbre de sortie (2) porté par une première bague dudit roulement, ledit actionneur comprenant un moyen d'entrée (10) mobile mécaniquement et étant susceptible de transformer un mouvement du moyen d'entrée en un mouvement de rotation de l'arbre de sortie (2) autour de l'axe dudit roulement, la seconde bague (3) dudit roulement étant liée en rotation à la pièce (1)
**caractérisé en ce qu'**une butée réglable (5) est fixée à ladite seconde bague (3) et coopère avec le manche (6) de façon à limiter angulairement la rotation relative des deux bagues dudit roulement, et **en ce que** des bras flexibles (4) reliant la seconde bague dudit roulement et la pièce limitent le taux de rotation de l'arbre de sortie (2) en réponse à un déplacement du moyen d'entrée (10) lorsque le manche (6) est en appui sur la butée réglable (5).

2. Actionneur selon la revendication 1 dans lequel le moyen d'entrée (10) est une courroie circulant autour d'une poulie de renvoi (8) portée par une platine (9) montée en extension radiale sur la seconde bague (3).

3. Actionneur selon la revendication 2 dans lequel l'extrémité libre (11) de la platine (9) est rappelée par un moyen élastique contre une butée (13) fixe par rapport à la structure de l'équipement spatial.

4. Actionneur selon la revendication 3 dans lequel l'extrémité libre (11) de la platine (9) est en contact avec la butée fixe (13) lorsque le manche (6) n'est pas en appui sur la butée réglable (5) et n'est pas en contact avec la butée fixe (13) lorsque le manche (6) est en appui sur la butée réglable (5).

5. Actionneur selon l'une des revendications 2 à 4 dans lequel la courroie (10) entraîne le manche (6) par action directe sur l'arbre de sortie (2).

6. Actionneur selon l'une des revendications 2 à 4 dans lequel la courroie (10) entraîne le manche (6) par l'intermédiaire d'un système démultipliant la rotation de la poulie de renvoi (8).

7. Actionneur selon la revendication 6 dans lequel la poulie de renvoi (8) est une poulie double, la courroie (10) circulant sur une première poulie 8A et dans lequel le manche (6) est entraîné par l'intermédiaire d'une seconde courroie (20) agissant sur l'arbre de sortie (2) et circulant sur la seconde poulie 8B.

8. Système de guidage pour équipement spatial comportant un actionneur pour dispositif de positionnement en rotation d'un élément mobile selon l'une des revendications 1 à 7.

9. Équipement spatial comportant un système de guidage selon la revendication 8.

## Claims

1. Actuator for a device for the rotary positioning of a movable element for space equipment comprising a part (1) that can be attached to the fixed portion of said equipment, a bearing of the ball or roller type, a sleeve (6) designed to actuate the movable portion of said equipment and mounted on an output shaft (2) supported by a first race of said bearing, said actuator comprising a mechanically movable input means (10) and being capable of converting a movement of the input means into a rotary movement of the output shaft (2) about the axis of said bearing, the second race (3) of said bearing being connected in rotation to the part (1), **characterized in that** an adjustable stop (5) is attached to said second race (3) and interacts with the sleeve (6) so as to angularly limit the relative rotation of the two races of said bearing, and **in that** flexible areas (4) connecting the second race of said bearing and the part limit the rate of rotation of the output shaft (2) in response to a movement of the input means (10) when the sleeve (6) is resting on the adjustable stop (5).

2. Actuator according to Claim 1, in which the input means (10) is a belt running around a guide pulley (8) supported by a plate (9) mounted as a radial extension on the second race (3).

3. Actuator according to Claim 2, in which the free end (11) of the plate (9) is returned by an elastic means against a stop (13) that is fixed relative to the structure of the space equipment.

4. Actuator according to Claim 3, in which the free end (11) of the plate (9) is in contact with the fixed stop (13) when the sleeve (6) is not resting on the adjustable stop (5) and is not in contact with the fixed stop (13) when the sleeve (6) is resting on the adjustable stop (5).

5. Actuator according to one of Claims 2 to 4, in which the belt (10) drives the sleeve (6) by direct action on the output shaft (2).

6. Actuator according to one of Claims 2 to 4, in which the belt (10) drives the sleeve (6) by means of a system gearing down the rotation of the guide pulley (8) .

7. Actuator according to Claim 6, in which the guide pulley (8) is a double pulley, the belt (10) running on a first pulley 8A and in which the sleeve (6) is driven by means of a second belt (20) acting on the output shaft (2) and running on the second pulley 8B.

8. Guidance system for space equipment comprising an actuator for a device for the rotary positioning of a movable element according to one of Claims 1 to 7.

9. Space equipment comprising a guidance system according to Claim 8.

## Patentansprüche

1. Stellglied für eine Vorrichtung zur rotatorischen Positionierung eines beweglichen Elements für eine Raumfahrtausrüstung, mit einem Teil (1), das am festen Teil der Ausrüstung befestigt werden kann, einem Wälzlager des Kugel- oder Rollentyps, einem Griff (6), der dazu bestimmt ist, den beweglichen Teil der Ausrüstung zu betätigen, und der an einer Abtriebswelle (2) montiert ist, die von einem ersten Laufring des Wälzlagers getragen wird, wobei das Stellglied ein mechanisch bewegliches Eingangsmittel (10) enthält und eine Bewegung des Eingangsmittels in eine Drehbewegung der Abtriebswelle (2) um die Achse des Wälzlagers umformen kann, wobei der zweite Laufring (3) des Wälzlagers mit dem Teil (1) rotatorisch verbunden ist, **dadurch gekennzeichnet, dass** an dem zweiten Laufring (3) ein einstellbarer Anschlag (5) befestigt ist, der mit dem Griff (6) in der Weise zusammenwirkt, dass die relative Drehung der zwei Laufringe des Wälzlagers in Winkelrichtung begrenzt wird, und dass biegsame Arme (4), die den zweiten Laufring des Wälzlagers und das Teil verbinden, den Drehbetrag der Abtriebswelle (2) in Reaktion auf eine Verlagerung des Eingangsmittels (10) begrenzen, wenn sich der Griff (6) an dem einstellbaren Anschlag (5) abstützt.

2. Stellglied nach Anspruch 1, wobei das Eingangsmittel (10) ein Riemen ist, der um eine Umlenkscheibe (8) umläuft, die von einer Platte (9) getragen wird, die am zweiten Laufring (3) radial verlaufend montiert ist.

3. Stellglied nach Anspruch 2, wobei das freie Ende (11) der Platte (9) durch ein elastisches Mittel gegen einen in Bezug auf die Struktur der Raumfahrtausrüstung festen Anschlag (13) gedrängt wird.

4. Stellglied nach Anspruch 3, wobei das freie Ende (11) der Platte (9) mit dem festen Anschlag (13) in Kontakt ist, wenn sich der Griff (6) nicht an dem einstellbaren Anschlag (5) abstützt, und mit dem festen Anschlag (13) nicht in Kontakt ist, wenn sich der Griff (6) an dem einstellbaren Anschlag (5) abstützt.

5. Stellglied nach einem der Ansprüche 2 bis 4, wobei der Riemen (10) den Griff (6) durch direkte Einwirkung auf die Abtriebswelle (2) antreibt.

6. Stellglied nach einem der Ansprüche 2 bis 4, wobei der Riemen (10) den Griff (6) über ein System antreibt, das die Drehung der Umlenkscheibe (8) untersetzt.

7. Stellglied nach Anspruch 6, wobei die Umlenkscheibe (8) eine Doppelscheibe ist und der Riemen (10) um eine erste Scheibe (8A) umläuft und wobei der Griff (6) über einen zweiten Riemen (20), der auf die Abtriebswelle (2) einwirkt und um die zweite Umlenkscheibe (8B) umläuft, angetrieben wird.

8. Lenksystem für Raumfahrtausrüstung, das ein Stellglied für eine Vorrichtung zur rotatorischen Positionierung eines beweglichen Elements nach einem der Ansprüche 1 bis 7 enthält.

9. Raumfahrtausrüstung, die ein Führungssystem nach Anspruch 8 enthält.
